# EUROPEAN PATENT APPLICATION

(11) **EP 3 917 226 A1**
(43) Date of publication of application: **01.12.2021**
(21) Application number: 19911553.6
(22) Date of filing: 25.01.2019
(51) Int. Cl.: H04W 56/00, H04L 7/00, H04W 4/00, H04W 84/10, H04W 88/06

(54) **INDUSTRIAL MACHINE SYSTEM, METHOD OF COMMUNICATION, AND WIRELESS ACCESS POINT**

(71) Applicant: Kabushiki Kaisha Yaskawa Denki, Kitakyushu-shi, Fukuoka 806-0004 (JP)
(72) Inventor: KOBAYASHI, Kazutoshi, Kitakyushu-shi, Fukuoka 806-0004 (JP); KOGA, Hidetsugu, Kitakyushu-shi, Fukuoka 806-0004 (JP)
(74) Representative: Viering, Jentschura & Partner mbB Patent- und Rechtsanwälte
(86) International application number: PCT/JP2019/002530
(87) International publication number: WO 2020/152861

(57) **Abstract**

An industrial machine system 1 according to the present disclosure includes slave devices #1/#2 that are industrial machine components, and a master device 10 that communicates with the slave devices #1/#2 and controls the slave devices #1/#2. The slave devices #1/#2 and the master device 10 are synchronized via a wireless network #1, and communicate communication for controlling the slave devices #1/#2 via a wireless network #2 which is different from the wireless network #1.

## Description

### [Technical Field]

The present disclosure relates to an industrial machine system, a method of communication and a wireless access point.

### [Technical Background]

In an industrial machine system, in order to perform high-precision control, it is necessary to achieve synchronization between devices connected to a network. As a method for the synchronization, a method is known in which a master device transmits a synchronization packet (Sync) for every communication period, and a slave device updates (corrects) its own clock based on a reception timing of the synchronization packet.

### [Related Art]

### [Patent Document]

[Patent Document 1] Japanese Patent Application Laid-Open Publication No. 2012-34224.
[Patent Document 2] International Publication No. WO 2016/072038.

### [Summary of the Invention]

### [Problems to Be Solved by the Invention]

However, in a conventional industrial machine system, there is a problem that when a wireless network using CSMA/CA or the like, which is used as a communication system in many wireless networks, is used as a network, variation occurs in actual transmission and reception timings of synchronization packets and synchronization between a master device and a slave device cannot be achieved.

Therefore, the present disclosure is accomplished in view of the above-described problem, and is intended to provide an industrial machine system, a method of communication and a wireless access point that allow synchronization between a master device and a slave device to be achieved and high-precision control to be realized even when a wireless network is used.

### [Means for Solving the Problems]

A first feature of the present disclosure is an industrial machine system that includes: a slave device that is an industrial machine component; and a master device that communicates with the slave device and controls the slave device. The slave device and the master device are synchronized via a first wireless network, and communicate communication data for controlling the slave device via a second wireless network which is different from the first wireless network.

A second feature of the present disclosure is a method of communication of an industrial machine system. The industrial machine system includes: a slave device that is an industrial machine component; and a master device that communicates with the slave device and controls the slave device. The slave device and the master device are synchronized via a first wireless network. The slave device and the master device communicate communication data for controlling the slave device via a second wireless network which is different from the first wireless network.

A third feature of the present disclosure is a wireless access point to be used in an industrial machine system. The industrial machine system includes: a slave device that is an industrial machine component; and a master device that communicates with the slave device and controls the slave device. The wireless access point is connected to the master device via a wired network and includes: a wireless synchronization packet generation part that generates a wireless synchronization packet with a wireless synchronization period synchronized with at least one of a control period and a communication period of the master device; a first wireless communication part that transmits the wireless synchronization packet generated by the wireless synchronization packet generation part to the slave device via a first wireless network; and a second wireless communication part that communicates via a second wireless network the communication data communicated with the master device via the wired network. The wireless synchronization packet generation part generates the wireless synchronization packet with the wireless synchronization period based on a first synchronization packet received with a first communication period from the master device via the wired network.

A fourth feature of the present disclosure is a wireless access point to be used in an industrial machine system. The industrial machine system includes: a slave device that is an industrial machine component; and a master device that communicates with the slave device and controls the slave device. The wireless access point is connected to the slave device via a wired network and includes: a first wireless communication part that receives via a first wireless network a wireless synchronization packet generated by a wireless synchronization packet generation part that generates the wireless synchronization packet with a wireless synchronization period synchronized with at least one of a control period and a communication period of the master device; the synchronization part that transmits to the slave device via the wired network a second synchronization packet for synchronizing at least one of a control period and a communication period of the slave device based on the wireless synchronization packet; and a second wireless communication part that communicates via a second wireless network the communication data communicated with the slave device via the wired network.

### [Effect of the Invention]

According to the present disclosure, an industrial machine system, a method of communication and a wireless access point can be provided that allow synchronization between a master device and a slave device to be achieved and high-precision control to be realized even when a wireless network is used.

### [Brief Description of the Drawings]

[Fig. 1] Fig. 1 illustrates an example of an overall structure of an industrial machine system 1 according a disclosure.
[Fig. 2] Fig. 2 illustrates an example of functional blocks of a wireless access point #0 used in the industrial machine system 1 according to the disclosure.
[Fig. 3] Fig. 3 illustrates an example of functional blocks of wireless access points #1/#2 used in the industrial machine system 1 according to the disclosure.
[Fig. 4] Fig. 4 is for describing an example of a method of communication of the industrial machine system 1 according to the disclosure.

### [Mode for Carrying Out the Invention]

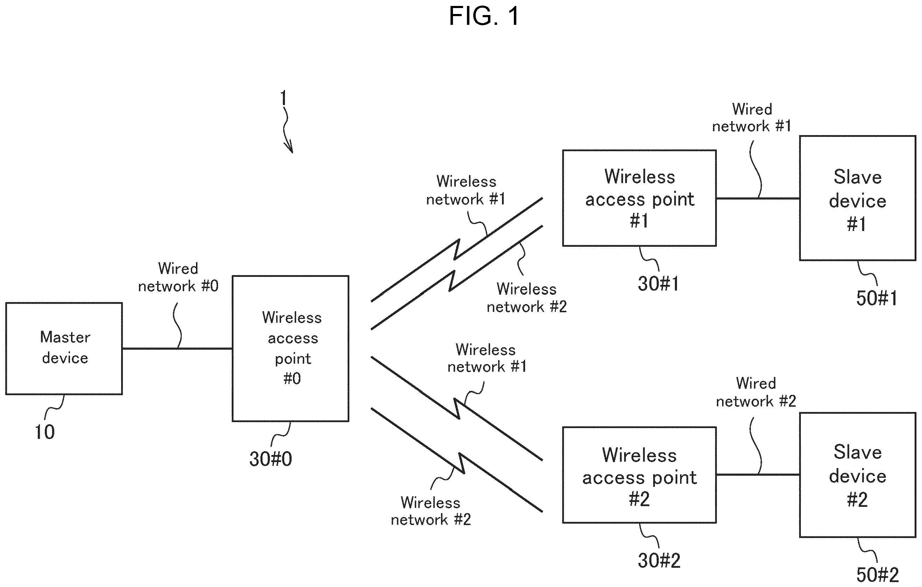

In the following, an embodiment is described with reference to Figs. 1 ― 4.

### <Structure of industrial machine system>

An example of a structure of an industrial machine system 1 according to the present embodiment is described below with reference to Figs. 1 ― 3.

As illustrated in Fig. 1, the industrial machine system 1 according to the present embodiment includes a master device 10, a wireless access point #0 (30#0), a wireless access point #1 (30#1), a wireless access point #2 (30#2), a slave device #1 (50#1), and a slave device #2 (50#2).

The master device 10 is an industrial machine component that communicates with the slave devices #1/#2 and controls the slave devices #1/#2, and the slave devices #1/#2 are industrial machine components that communicate with the master device 10.

Specifically, as illustrated in Fig. 1, the master device 10 is connected to the wireless access point #0 via a wired network #0, the slave device #1 is connected to the wireless access point #1 via a wired network #1, and the slave device #2 is connected to the wireless access point #2 via a wired network #2. Here, the wired networks #0 - #2 are each any communication system.

Further, the wireless access point #0 is connected to the wireless access point #1 via wireless networks #1/#2, and is also connected to the wireless access point #2 via the wireless networks #1/#2.

Here, it is structured that the slave devices #1/#2 and the master device 10 are synchronized via the wireless network #1 (first wireless network).

Further, it is structured that the slave devices #1/#2 and the master device 10 communicate communication data for controlling the slave devices via the wireless network #2 (second wireless network) which is different from the wireless network #1.

According to such structures, in the industrial machine system 1, even when the wireless networks are used, synchronization can be achieved between the master device 10 and the slave devices #1/#2, and high-precision control can be realized.

The same communication protocol may be used in the wireless network #1 and the wireless network #2.

Here, the wireless network #1 is a communication system having a constant periodicity (or regularity). According to such a structure, synchronization can be more reliably achieved between the master device 10 and the slave devices #1/#2 via the wireless network #1.

Further, the wireless network #2 is any communication system. For example, the wireless network #2 may be a communication system having a higher throughput than the wireless network #1. According to such a structure, since communication data can be communicated with a high throughput via the wireless network #2, high-precision control can be realized.

For example, it may be structured that the communication protocol used in the wireless network #1 is Bluetooth (registered trademark) or DECT (registered trademark, Digital Enhanced Cordless Telecommunications), and the communication protocol used in the wireless network #2 is any one of Wi-Fi (registered trademark), Bluetooth (registered trademark), and DECT (registered trademark).

According to such a structure, synchronization can be achieved between the master device 10 and the slave devices #1/#2 using a highly versatile wireless network, and an industrial machine system 1 using highly reliable wireless networks can be realized.

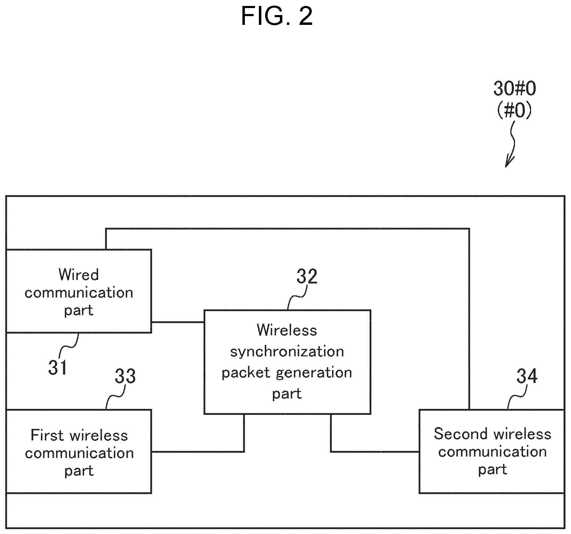

As illustrated in Fig. 2, the wireless access point 30#0 includes a wired communication part 31, a wireless synchronization packet generation part 32, a first wireless communication part 33, and a second wireless communication part 34.

It is structured that the wired communication part 31 performs communication with the master device 10 via the wired network #0.

It is structured that the wireless synchronization packet generation part 32 generates a wireless synchronization packet with a wireless synchronization period synchronized with at least one of a control period and a communication period of the master device 10.

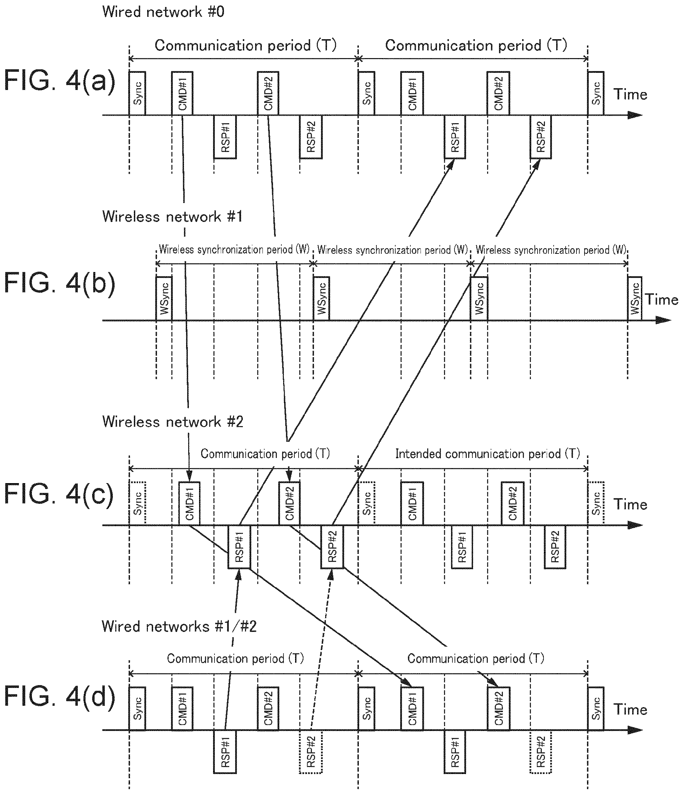

For example, it is structured that the wireless synchronization packet generation part 32 generates a wireless synchronization packet (WSync) (see Fig. 4(b) to be described later) with a wireless synchronization period (W) (see Fig. 4(b) to be described later) based on a synchronization packet (Sync) (first synchronization packet, see Fig. 4(a) to be described later) received with a communication period (T) (first communication period, see Fig. 4(a) to be described later) by the wired communication part 31 from the master device 10 via the wired network #0.

It is structured that the first wireless communication part 33 transmits the wireless synchronization packet generated by the wireless synchronization packet generation part 32 to the slave devices #1/#2 via the wireless network #1.

Specifically, it is structured that the first wireless communication part 33 transmits the wireless synchronization packet generated by the wireless synchronization packet generation part 32 to the wireless access point #1 via the wireless network #1, and the wireless access point #1 forwards the wireless synchronization packet to the slave device #1 via the wired network #1.

Similarly, it is structured that the first wireless communication part 33 transmits the wireless synchronization packet generated by the wireless synchronization packet generation part 32 to the wireless access point #2 via the wireless network #1, and the wireless access point #2 forwards the wireless synchronization packet to the slave device #1 via the wired network #2.

It is structured that the second wireless communication part 34 communicates via the wireless network #2 communication data communicated via the wired network #0 with the master device 10.

Specifically, it is structured that the second wireless communication part 33 transmits to the wireless access point #1 via the wireless network #2 communication data received by the wired communication part 31 from the master device 10 via the wired network #0, and the wireless access point #1 forwards the communication data to the slave device #1 via the wired network #1.

Similarly, it is structured that the second wireless communication part 33 transmits to the wireless access point #2 via the wireless network #2 the communication data received by the wired communication part 31 from the master device 10 via the wired network #0, and the wireless access point #2 forwards the communication data to the slave device #1 via the wired network #2.

Further, it is structured that the slave device #1 transmits communication data addressed to the master device 10 to the wireless access point #1 via the wired network #1, the wireless access point #1 forwards the communication data addressed to the master device 10 to the wireless access point #0 via the wireless network #2, the second wireless communication part 33 receives via the wireless network #2 the communication data addressed to the master device 10, and the wired communication part 31 transmits the communication data addressed to the master device 10 to the master device 10 via the wired network #0.

Similarly, it is structured that the slave device #2 transmits communication data addressed to the master device 10 to the wireless access point #2 via the wired network #2, the wireless access point #2 forwards the communication data addressed to the master device 10 to the wireless access point #0 via the wireless network #2, the second wireless communication part 33 receives via the wireless network #2 the communication data addressed to the master device 10, and the wired communication part 31 transmits the communication data addressed to the master device 10 to the master device 10 via the wired network #0.

According to such a structure, an industrial machine system 1 using a wireless network can be constructed even when an existing master device built for a wired network is used. Further, according to such a structure, a wireless access point does not depend on a device to be connected, and thus, can be applied to many types of devices.

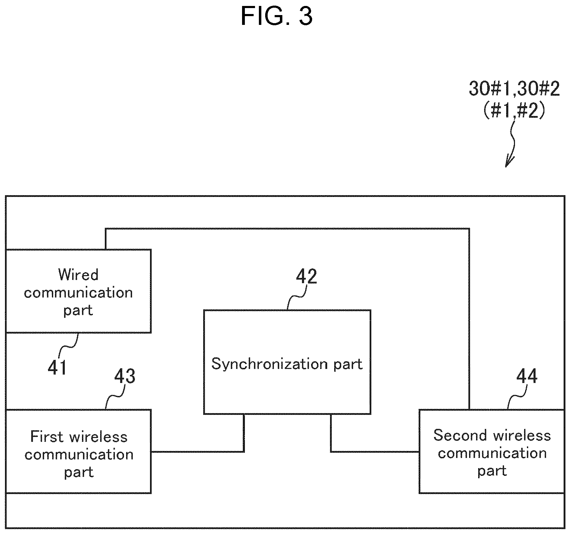

As illustrated in Fig. 3, the wireless access points 30#1/30#2 each include a wired communication part 41, a first wireless communication part 42, a synchronization part 43, and a second wireless communication part 44.

It is structured that the wired communication part 41 performs communication with the slave device #1/#2 via the wired network #1/#2.

It is structured that the first wireless communication part 42 receives via the wireless network #1 a wireless synchronization packet generated by the wireless synchronization packet generation part 32 of the wireless access point #0.

It is structured that, based on the wireless synchronization packet received by the first wireless communication part 42, the synchronization part 43 transmits to the slave device #1/#2 via the wired network #1/#2 a synchronization packet (Sync) (second synchronization packet, see Fig. 4(d) to be described later) for synchronizing at least one of a control period and a communication period of the slave device #1/#2.

It is structured that the second wireless communication part 44 communicates via the wireless network #2 communication data communicated via the wired network #1/#2 with the slave device #1/#2.

Specifically, it is structured that the second wireless communication part 44 of the wireless access point #1 transmits to the wireless access point #0 via the wireless network #2 communication data addressed to the master device 10 received by the wired communication part 41 from the slave device #1 via the wired network #1.

Similarly, it is structured that the second wireless communication part 44 of the wireless access point #2 transmits to the wireless access point #0 via the wireless network #2 communication data addressed to the master device 10 received by the wired communication part 41 from the slave device #1 via the wired network #2.

Further, it is structured that the second wireless communication part 44 of the wireless access point #1 receives communication data addressed to the slave device #1 from the wireless access point #0 via the wireless network #2, and the wired communication part 41 transmits the communication data addressed to the slave device #1 to the slave device #1 via the wired network #1.

Similarly, it is structured that the second wireless communication part 44 of the wireless access point #2 receives communication data addressed to the slave device #2 from the wireless access point #0 via the wireless network #2, and the wired communication part 41 transmits the communication data addressed to the slave device #2 to the slave device #2 via the wired network #2.

According to such a structure, an industrial machine system 1 using a wireless network can be constructed even when an existing slave device built for a wired network is used. Further, according to such a structure, a wireless access point does not depend on a device to be connected, and thus, can be applied to many types of devices.

Here, the master device 10 may have the function of the wireless access point #0. Similarly, the slave device #1 may have the function of the wireless access point #1, and the slave device #2 may have the function of the wireless access point #2.

According to the above-described structure, when synchronization between the master device 10 and the slave devices #1/#2 is performed, the slave devices #1/#2 can be reliably and accurately synchronized with respect to the master device 10.

The wireless access points 30#0 - #2 may have the same function. For example, the wireless access point 30#0 may have the functions illustrated in Fig. 3 in addition to the functions illustrated in Fig. 2. Similarly, the wireless access points 30#1/30#2 may have the functions illustrated in Fig. 2 in addition to the functions illustrated in Fig. 3.

Here, for example, the master device 10 may be any one of a programmable logic controller, a machine controller, a system controller, a robot controller (hereinafter, various controllers), a numerical control device, and a servo amplifier.

Further, the slave devices #1/#2 may each be any one of a servo drive, an inverter drive, a remote I/O, a sensor, a slider, a stepping motor drive, a display, a vision system, various controllers, a servo motor, and an encoder.

According to such a structure, by using the wireless networks #0 - #2, an industrial machine system 1 with reduced wiring can be realized and wiring work between the master device 10 and the slave devices #1/#2 can be reduced.

Further, according to such a structure, an industrial machine system allowing relocations and changes of the master device 10 and the slave devices #1/#2 to be flexibly supported can be constructed.

Further, according to such a structure, advanced control in a small space such as the inside of a robot arm can be realized.

In the above-described embodiment, the example in which one master device 10, two slave devices #1/#2, three wireless access points #0 - #2, two wireless networks #1/#2, and three wired networks #0 - #2 are provided is described. However, the present disclosure is not limited to such an example, and is also applicable to examples in which other numbers of master devices, slave devices, wireless access points, wireless networks, and wired networks are provided.

### <Method of communication of the industrial machine system>

In the following, an example of a method of communication of the industrial machine system 1 according to the present embodiment is described with reference to Fig. 4.

As illustrated in Fig. 4(a), the master device 10 transmits a synchronization packet (Sync) to the wireless access point #0 via the wired network #0 in a communication period (T).

As illustrated in Fig. 4(b), the wireless access point #0 generates a wireless synchronization packet (WSync) based on the synchronization packet (Sync) in a wireless synchronization period (W), and transmits the wireless synchronization packet (WSync) to the wireless access points #1/#2 via the wireless network #1.

Here, the wireless access points #1/#2 are synchronized with the wireless access point #0 based on the received wireless synchronization packet (WSync).

As illustrated in Fig. 4(d), the wireless access points #1/#2 respectively transmit the synchronization packet (Sync) to the slave devices #1/#2 via the wired networks #1/#2 based on the received wireless synchronization packet (WSync) in the communication period (T).

Here, the slave devices #1/#2 are synchronized with the master device 10 based on the received synchronization packet (Sync).

Further, as illustrated in Fig. 4(a), the master device 10 transmits communication data (CMD#1) addressed to the slave device #1 to the wireless access point #0 via the wired network #1; as illustrated in Fig. 4(c), the wireless access point #0 transmits the communication data (CMD#1) addressed to the slave device #1 to the wireless access point #1 via the wireless network #2; and, as illustrated in Fig. 4(d), the wireless access point #1 transmits the communication data (CMD#1) addressed to the slave device #1 to the slave device #1 via the wired network #1.

Then, as illustrated in Fig. 4(d), the slave device #1 transmits data (RSP#1) addressed to the master device 10 to the wireless access point #1 via the wired network #1; as illustrated in Fig. 4(c), the wireless access point #1 transmits the data (RSP#1) addressed to the master device 10 to the wireless access point #0 via the wireless network #2; and, as illustrated in Fig. 4(a), th wireless access point #0 transmits the data (RSP#1) addressed to the master device 10 to the master device 10 via the wired network #0.

Similarly, as illustrated in Fig. 4(a), the master device 10 transmits communication data (CMD#2) addressed to the slave device #2 to the wireless access point #0 via the wired network #1; as illustrated in Fig. 4(c), the wireless access point #0 transmits the communication data (CMD#2) addressed to the slave device #2 to the wireless access point #2 via the wireless network #2; and, as illustrated in Fig. 4(d), the wireless access point #2 transmits the communication data (CMD#2) addressed to the slave device #2 to the slave device #2 via the wired network #2.

Then, as illustrated in Fig. 4(d), the slave device #2 transmits data (RSP#2) addressed to the master device 10 to the wireless access point #2 via the wired network #2; as illustrated in Fig. 4(c), the wireless access point #2 transmits the data (RSP#2) addressed to the master device 10 to the wireless access point #0 via the wireless network #2; and, as illustrated in Fig. 4(a), the wireless access point #0 transmits the data (RSP#2) addressed to the master device 10 to the master device 10 via the wired network #0.

According to the industrial machine system 1 of the present embodiment, even when the wireless networks #1/#2 are used, synchronization can be achieved between the master device 10 and the slave devices #1/#2, and high-precision control can be realized.

### [Description of Reference Numeral Symbols]

- 1:: industrial machine system
- 10:: master device
- 30#0, 30#1, 30#2:: wireless access point
- 31, 41:: wired communication part
- 32:: wireless synchronization packet generation part
- 33, 42:: first wireless communication part
- 34, 44:: second wireless communication part
- 43:: synchronization part
- 50#1, 50#2:: slave device

## Claims

1. An industrial machine system comprising:
a slave device that is an industrial machine component; and
a master device that communicates with the slave device and controls the slave device, wherein
the slave device and the master device are synchronized via a first wireless network, and communicate communication data for controlling the slave device via a second wireless network which is different from the first wireless network.

2. The industrial machine system according to claim 1, wherein the first wireless network is a communication system having a constant periodicity.

3. The industrial machine system according to claim 1 or 2, wherein the second wireless network is a communication system having a higher throughput than the first wireless network.

4. The industrial machine system according to any one of claims 1 ― 3, wherein
a communication protocol used in the first wireless network is Bluetooth (registered trademark) or DECT (registered trademark), and
a communication protocol used in the second wireless network is any one of Wi-Fi (registered trademark), Bluetooth (registered trademark), and DECT (registered trademark).

5. The industrial machine system according to any one of claims 1 ― 4, comprising:
a wireless synchronization packet generation part that generates a wireless synchronization packet with a wireless synchronization period synchronized with at least one of a control period and a communication period of the master device; and
a synchronization part that synchronizes at least one of a control period and a communication period of the slave device based on the wireless synchronization packet acquired via the first wireless network.

6. The industrial machine system according to claim 5, further comprising:
a first wireless access point that is connected to the master device via a wired network and includes:
the wireless synchronization packet generation part;
a first wireless communication part that transmits the wireless synchronization packet generated by the wireless synchronization packet generation part to the slave device via the first wireless network; and
a second wireless communication part that communicates via the second wireless network the communication data communicated with the master device via the wired network, wherein
the wireless synchronization packet generation part generates the wireless synchronization packet with the wireless synchronization period based on a first synchronization packet received with a first communication period from the master device via the wired network.

7. The industrial machine system according to claim 5 or 6, further comprising:
a second wireless access point that is connected to the slave device via a wired network and includes:
a first wireless communication part that receives the wireless synchronization packet generated by the wireless synchronization packet generation part via the first wireless network;
a synchronization part that transmits to the slave device via the wired network a second synchronization packet for synchronizing at least one of a control period and a communication period of the slave device based on the wireless synchronization packet; and
a second wireless communication part that communicates via the second wireless network the communication data communicated with the slave device via the wired network.

8. The industrial machine system according to any one of claims 1 ― 6, wherein
the master device is any one of a programmable logic controller, a machine controller, a system controller, a robot controller (hereinafter, various controllers), a numerical control device, and a servo amplifier, and
the slave device is any one of a servo drive, an inverter drive, a remote I/O, a sensor, a slider, a stepping motor drive, a display, a vision system, various controllers, a servo motor, and an encoder.

9. A method of communication of an industrial machine system, wherein
the industrial machine system includes:
a slave device that is an industrial machine component; and
a master device that communicates with the slave device and controls the slave device,
the slave device and the master device are synchronized via a first wireless network, and
the slave device and the master device communicate communication data for controlling the slave device via a second wireless network which is different from the first wireless network.

10. A wireless access point to be used in an industrial machine system that includes: a slave device that is an industrial machine component; and a master device that communicates with the slave device and controls the slave device, the wireless access point being connected to the master device via a wired network and comprising:
a wireless synchronization packet generation part that generates a wireless synchronization packet with a wireless synchronization period synchronized with at least one of a control period and a communication period of the master device;
a first wireless communication part that transmits the wireless synchronization packet generated by the wireless synchronization packet generation part to the slave device via a first wireless network; and
a second wireless communication part that communicates via a second wireless network the communication data communicated with the master device via the wired network, wherein
the wireless synchronization packet generation part generates the wireless synchronization packet with the wireless synchronization period based on a first synchronization packet received with a first communication period from the master device via the wired network.

11. A wireless access point to be used in an industrial machine system that includes: a slave device that is an industrial machine component; and a master device that communicates with the slave device and controls the slave device, the wireless access point being connected to the slave device via a wired network and comprising:
a first wireless communication part that receives via a first wireless network a wireless synchronization packet generated by a wireless synchronization packet generation part that generates the wireless synchronization packet with a wireless synchronization period synchronized with at least one of a control period and a communication period of the master device;
a synchronization part that transmits to the slave device via the wired network a second synchronization packet for synchronizing at least one of a control period and a communication period of the slave device based on the wireless synchronization packet; and
a second wireless communication part that communicates via a second wireless network the communication data communicated with the slave device via the wired network.
